# EUROPEAN PATENT APPLICATION

(11) **EP 4 475 066 A1**
(43) Date of publication of application: **11.12.2024**
(21) Application number: 22932126.0
(22) Date of filing: 17.03.2022
(51) Int. Cl.: G06Q 50/30

(54) **TRANSPORTATION SERVICE COOPERATION ASSISTANCE DEVICE, TRANSPORTATION SERVICE COOPERATION ASSISTANCE METHOD, AND TRANSPORTATION SERVICE COOPERATION ASSISTANCE SYSTEM**

(71) Applicant: Hitachi, Ltd., Tokyo 100-8280 (JP)
(72) Inventor: TOMIYAMA, Tomoe, Tokyo 100-8280 (JP); MINAKAWA, Tsuyoshi, Tokyo 100-8280 (JP); HASEGAWA, Yohei, Tokyo 100-8280 (JP); ADACHI, Shingo, Tokyo 100-8280 (JP); KIMURA, Keiji, Tokyo 100-8280 (JP); YONEHARA, Miki, Tokyo 100-8280 (JP)
(74) Representative: Manitz Finsterwald Patent- und Rechtsanwaltspartnerschaft mbB
(86) International application number: PCT/JP2022/012381
(87) International publication number: WO 2023/175852

(57) **Abstract**

An object of the invention is to maintain autonomy of each traffic service provider and enables efficient cooperation between traffic services. A traffic service cooperation support system 1 includes a plurality of traffic service planning devices that manage traffic service plan information including transportation plan information between boarding and alighting points of a passenger, and a traffic service cooperation support device 100. The traffic service cooperation support device 100 executes processing of calculating a transportation service evaluation value for a passenger at a transfer point based on the traffic service plan information received from each traffic service planning device and travel information of a passenger by each traffic service, and processing of transmitting a target value of a transportation service of a transportation mode of a traffic service at the transfer point to the traffic service planning device of a traffic service through which a passenger gets on and off at the transfer point when the evaluation value does not satisfy a predetermined condition. The traffic service planning device controls the transportation mode based on the traffic service plan information generated based on the target value.

## Description

### Technical Field

The present invention relates to a traffic service cooperation support device, a traffic service cooperation support method, and a traffic service cooperation support system.

### Background Art

A traffic service provider such as a railway, bus, or taxi usually has an operation planning system that creates an operation plan for a traffic service. However, cooperation between traffic services is often insufficient. Therefore, for example, when an event such as an operation failure occurs in one traffic service, confusion may occur in an operation of other traffic services around a traffic service hub (transfer point), which may inconvenience passengers.

In some foreign countries, local governments are taking the lead in trying to formulate and operate a city traffic plan including a plurality of traffic services, which is expected to promote a modal shift to public transportation as an environmental measure. This may also promote a mobility hub that provides a plurality of modes at a travel base (station or bus stop) to expand travel options for people.

PTL 1 discloses a technique in which cooperation between railway and bus is performed based on passenger demand, and a resource mediation server predicts an arrival time when no railway car accident occurs, an arrival time after recovery from an accident, and an arrival time in a case of using a special bus based on a damage scale due to a railway car accident, delivers information to each passenger, delivers a special bus operation plan to a bus company, provides a condition for using the special bus to the passengers and the bus company based on prediction information on the arrival times, and conducts mediation of the number of special buses and a fare of each special bus between the passenger and the bus company.

### Citation List

### Patent Literature

PTL 1: JP2019-91389A

### SUMMARY OF THE INVENTION

### Technical Problem

However, in PTL 1, it is necessary to virtually match all passengers and traffic services to be adjusted on the server, and there is a possibility that a large-scale adjustment, such as a case where there are many cooperation destination traffic facilities or an adjustment for a wide area, cannot be performed in a realistic processing time. Although each traffic service provider has considerable knowledge about such an adjustment, PTL 1 does not provide a mechanism that can effectively use this knowledge.

The present invention has been made in view of such a background, and an object of the invention is to provide a traffic service cooperation support device, a traffic service cooperation support method, and a traffic service cooperation support system that can enable traffic services to efficiently cooperate with one another while maintaining the autonomy of each traffic service provider.

### Solution to Problem

In order to solve the above problem, according to one aspect of the invention, a traffic service cooperation support device that transmits information to and receives information from a plurality of traffic service planning terminals is provided. The traffic service cooperation support device includes a calculation unit, a storage unit, and a communication unit. The communication unit receives, from the plurality of traffic service planning terminals, traffic service plan information, which is information including information on a transportation plan of a passenger by a transportation mode provided by traffic services. The storage unit stores the traffic service plan information and travel information of a passenger acquired from a predetermined information processing device. The calculation unit executes service level calculation processing of calculating, based on the traffic service plan information stored in the storage unit and the travel information of a passenger by each of the traffic services stored in the storage unit, an evaluation value related to a transportation service for a passenger at a transfer point, which is a boarding and alighting point common to a plurality of the traffic services among boarding and alighting points of the traffic services, and service level target value calculation processing of determining whether the calculated evaluation value satisfies a predetermined condition, and calculating a target value related to a transportation service of a transportation mode of the traffic service at the transfer point based on the travel information when the calculated evaluation value does not satisfy the predetermined condition. The communication unit transmits the target value calculated in the service level target value calculation processing to the traffic service planning terminal related to a traffic service through which a passenger gets on and off at the transfer point.

### Advantageous Effects of Invention

According to the invention, traffic services can efficiently cooperate with one another while maintaining the autonomy of each traffic service provider.

Problems, configurations, and effects other than those described above will be clarified by the following description of embodiments.

### BRIEF DESCRIPTION OF THE DRAWINGS

[FIG. 1] FIG. 1 is a diagram illustrating an example of a configuration of a traffic service cooperation support system according to a first embodiment.
[FIG. 2] FIG. 2 is a diagram illustrating hardware and functions of a traffic service cooperation support device according to the first embodiment.
[FIG. 3] FIG. 3 is a diagram illustrating an example of first traffic service plan information.
[FIG. 4] FIG. 4 is a diagram illustrating an example of the first traffic service plan information.
[FIG. 5] FIG. 5 is a diagram illustrating an example of second traffic service plan information.
[FIG. 6] FIG. 6 is a diagram illustrating an example of service level threshold information.
[FIG. 7] FIG. 7 is a diagram illustrating an example of OD information.
[FIG. 8] FIG. 8 is a diagram illustrating an example of first traffic service provision history information.
[FIG. 9] FIG. 9 is a diagram illustrating an example of second traffic service provision history information.
[FIG. 10] FIG. 10 is a flowchart illustrating traffic service cooperation support processing according to the first embodiment.
[FIG. 11] FIG. 11 is a diagram illustrating an example of traffic network information.
[FIG. 12] FIG. 12 is a flowchart illustrating details of service level calculation processing.
[FIG. 13] FIG. 13 is a diagram illustrating an example of service level information associated with a certain node.
[FIG. 14] FIG. 14 is a flowchart illustrating details of economic benefit calculation processing.
[FIG. 15] FIG. 15 is a diagram illustrating hardware and functions of a traffic service cooperation support device according to a second embodiment.
[FIG. 16] FIG. 16 is a flowchart illustrating traffic service cooperation support processing according to the second embodiment.
[FIG. 17] FIG. 17 is a flowchart illustrating traffic service cooperation support processing according to a third embodiment.

### DESCRIPTION OF THE EMBODIMENTS

Hereinafter, embodiments of the invention will be described with reference to the drawings.

### First Embodiment

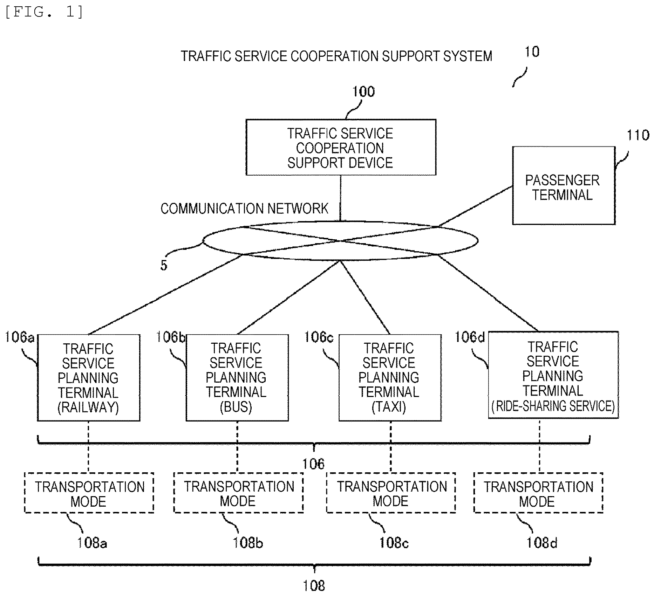

FIG. 1 is a diagram illustrating an example of a configuration of a traffic service cooperation support system 10 according to a first embodiment (the same applies to second and third embodiments to be described later).

The traffic service cooperation support system 10 includes a plurality of traffic service planning terminals 106 (106a, 106b, 106c, 106d ...), one or more passenger terminals 110, and a traffic service cooperation support device 100.

The traffic service planning terminal 106 is an information processing device managed by a traffic service provider that provides a traffic service to a passenger using various transportation modes (a vehicle or the like) such as railway or bus.

In the present embodiment, the traffic service provider includes a provider of a traffic service such as a railway or bus provider (hereinafter, referred to as a first traffic service), in which each transportation mode operates along a predetermined route based on a predetermined plan (schedule) between boarding and alighting points, and a provider of a traffic service such as a taxi or ride-sharing service provider (hereinafter, referred to as a second traffic service), in which a transportation mode has a dispatch plan to each boarding and alighting point but operates between boarding and alighting points along any route at any time according to passenger needs.

In addition, in the present embodiment, the traffic service includes a mass transit service that is a traffic service having a transportable passenger capacity of a certain number or more and is provided based on an operation plan, and other traffic services.

The traffic service planning terminal 106 has a function of creating plan information on each traffic service (the first traffic service and the second traffic service) (hereinafter, referred to as traffic service plan information). The traffic service plan information is, for example, a train operation schedule and a taxi dispatch plan.

In the present embodiment, the traffic service planning terminal 106 includes a predetermined control unit. The control unit has a function of controlling an operation of a traffic service based on the traffic service plan information, for example, controlling traveling of each transportation mode 108 (108a, 108b, 108c, 108d) or a facility (for example, a railroad crossing and a switch) necessary for the traveling according to the traffic service plan information.

The traffic service cooperation support device 100 cooperates with each traffic service planning terminal 106. When there is an event that causes deterioration of quality of a transportation service for a passenger, such as an operation failure at a certain boarding and alighting point, a change in an operation schedule, or congestion, and a disturbance occurs in an operation of one transportation mode, the traffic service cooperation support device 100 provides support such that all traffic services cooperate with one another to operate each transportation mode and enable a passenger to efficiently transfer to another traffic service at the boarding and alighting point, so as to maintain quality of the transportation service.

The passenger terminal 110 is an information processing device used by a passenger who uses each traffic service, and displays information generated by the traffic service cooperation support device 100 on a screen.

The traffic service planning terminal 106, the passenger terminal 110, and the traffic service cooperation support device 100 are communicably connected by a wired or wireless communication network such as the Internet, a local area network (LAN), a wide area network (WAN), or a dedicated line.

Next, the traffic service cooperation support device 100 will be described in detail.

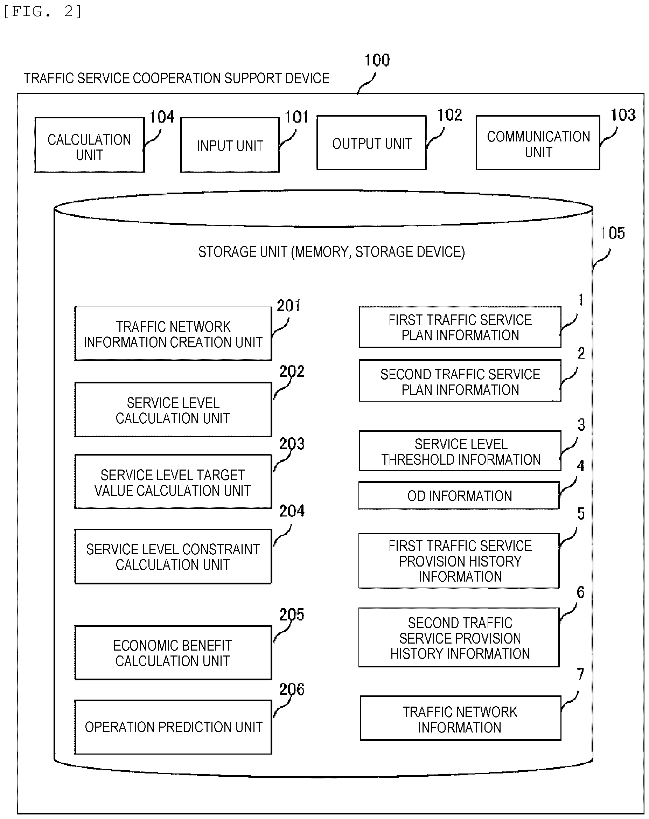

FIG. 2 is a diagram illustrating hardware and functions of the traffic service cooperation support device 100 according to the first embodiment.

The traffic service cooperation support device 100 includes a calculation unit 104 (a processor) such as a central processing unit (CPU), a digital signal processor (DSP), a graphics processing unit (GPU), or a field-programmable gate array (FPGA), a storage unit 105 including a memory such as a read only memory (ROM) or a random access memory (RAM), and a storage device such as a hard disk drive (HDD) or a solid state drive (SSD), a communication unit (a communication device) including a network interface card (NIC), a wireless communication module, a universal serial interface (USB) module, or a serial communication module, an input unit 101 (an input device) including a mouse and a keyboard, and an output unit 102 (an output device) including a liquid crystal display or an organic electroluminescence (EL) display.

The traffic service cooperation support device 100 includes functional units such as a traffic network information creation unit 201, a service level calculation unit 202, a service level target value calculation unit 203, a service level constraint calculation unit 204, an economic benefit calculation unit 205, and an operation prediction unit 206.

The service level calculation unit 202 receives, from the traffic service planning terminal 106 related to each traffic service, information on a transportation plan (the traffic service plan information) between boarding and alighting points of a passenger transported by a transportation mode in the traffic service. The service level calculation unit 202 calculates an evaluation value (hereinafter, referred to as a service level) related to a transportation service for a passenger at a transfer point of a plurality of traffic services among boarding and alighting points of the traffic services based on the received traffic service plan information and travel information (OD information 4) of a passenger transported by each traffic service. Details of the OD information 4 will be described later. Items of the service level include, for example, the number of transfer passengers at a boarding and alighting point, a transfer time, and an in-vehicle congestion rate.

The traffic network information creation unit 201 creates traffic network information 7 including a departure time of a transportation mode and the passenger capacity at each boarding and alighting point of each traffic service based on the traffic service plan information or the like. Details of the traffic network information 7 will be described later.

The service level target value calculation unit 203 determines whether the evaluation value (the service level) calculated by the service level calculation unit 202 satisfies a predetermined condition. When the service level does not satisfy the predetermined condition, the service level target value calculation unit 203 calculates a target value related to a transportation service (a service level target value) for each traffic service at a transfer point based on the OD information 4 or the like, and transmits the calculated target value to the traffic service planning terminal 106 related to the traffic service through which the passenger gets on and off at the transfer point.

The service level constraint calculation unit 204 calculates a service level target value and a transportation service request for a predetermined traffic service (a constraint for a predetermined traffic service. Hereinafter, simply referred to as a constraint) among a plurality of traffic services.

The economic benefit calculation unit 205 newly calculates a service level at a transfer point based on new traffic service plan information received from the traffic service planning terminal 106 of a traffic service provider and the OD information 4. When the calculated service level does not reach the service level target value, the economic benefit calculation unit 205 calculates a transportation service that a traffic service provider is expected to be able to provide based on operation information of the traffic service provider, and transmits economic profit information corresponding to the calculated transportation service to any one of the traffic service planning terminals 106.

When the new traffic service plan information received from the traffic service planning terminal 106 of the traffic service provider does not include information corresponding to the constraint (when the traffic service plan information does not satisfy the constraint), the economic benefit calculation unit 205 transmits economic benefit information in the case where the constraint is satisfied to each traffic service planning terminal 106.

The operation prediction unit 206 predicts a future operation status of each transportation mode of each traffic service based on the traffic service plan information received from the traffic service planning terminal 106 and information on a current operation status of a transportation mode of a traffic service.

The traffic service cooperation support device 100 manages information including first traffic service plan information 1, second traffic service plan information 2, service level threshold information 3, the OD information 4, first traffic service provision history information 5, second traffic service provision history information 6, and the traffic network information 7.

Hereinafter, these kinds of information will be described.

### (First Traffic Service Plan Information)

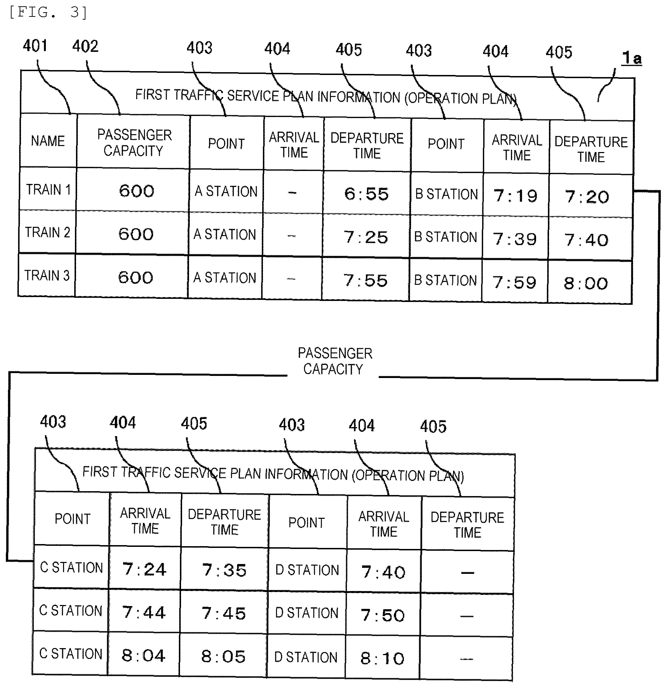

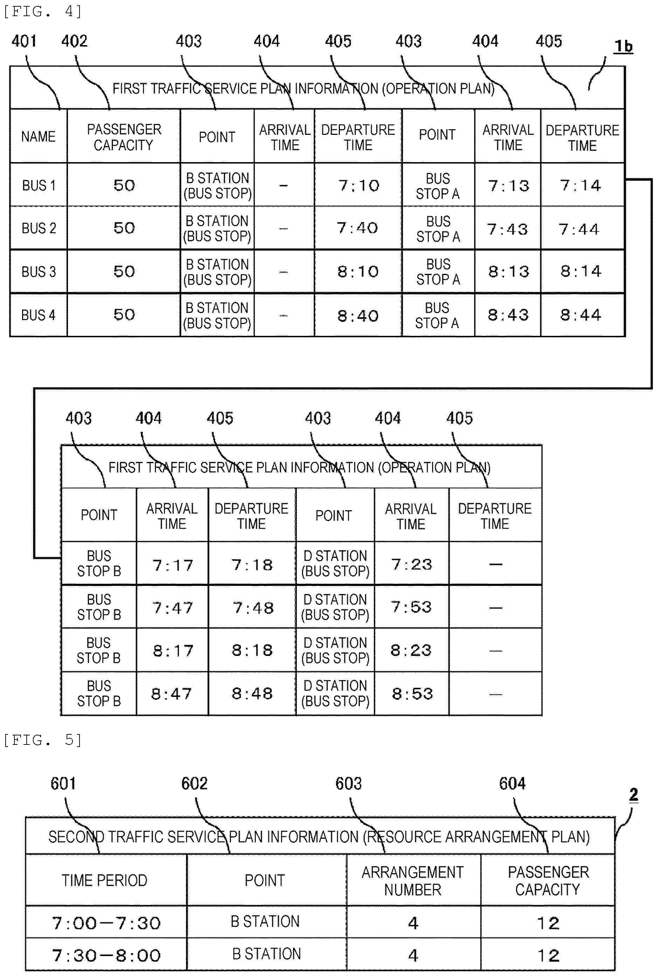

FIGS. 3 and 4 are diagrams illustrating an example of the first traffic service plan information 1. The first traffic service plan information 1 (1a, 1b) is information on an operation plan of the first traffic service. The first traffic service plan information 1 is a database including data items of a name 401 for setting a name (in the present embodiment, the name is specified by a train name, a flight number, or the like) of a transportation mode in the first traffic service (hereinafter, referred to as a first transportation mode), a transportable passenger 402 for setting the number of passengers that can be transported by the first transportation mode (the passenger capacity), a point 403 for setting a boarding and alighting point (in the present embodiment, the point refers to a departure point, an arrival point, a halfway stop point, or a passing point) for a passenger in the first transportation mode, an arrival time 404 for setting an arrival time at the boarding and alighting point, and a departure time 405 for setting a departure time from the boarding and alighting point. For the point 403, the arrival time 404, and the departure time 405, when a transportation mode transports passengers from an initial departure point to a final arrival point via a plurality of points, information is set for each boarding and alighting point.

The first traffic service plan information 1a illustrated in FIG. 3 is an example of a case where the first transportation mode is railway, and the first traffic service plan information 1b illustrated in FIG. 4 is an example of a case where the first transportation mode is a bus. In the present embodiment, the first traffic service plan information 1 illustrated in FIGS. 3 and 4 is used.

The traffic service cooperation support device 100 stores the traffic service plan information received from the traffic service planning terminal 106 related to the first traffic service in the first traffic service plan information 1.

### (Second Traffic Service Plan Information)

FIG. 5 is a diagram illustrating an example of the second traffic service plan information 2. The second traffic service plan information 2 is information on a resource arrangement plan of the second traffic service. The second traffic service plan information 2 is a database including data items of a time period 601 for setting an arrangement time period (for example, a frame such as a unit of 30 minutes may be defined in advance) of a transportation mode in the second traffic service (hereinafter, referred to as a second transportation mode), a point 602 for setting a boarding point (that is, a point where the second transportation mode is arranged) for a passenger in the second transportation mode in the time period, an arrangement number 603 for setting the number of the second transportation mode arranged in the boarding point (the number of standby taxies or the like), and a transportable passenger 604 for setting the number of passengers that can be transported by the second transportation mode (the passenger capacity).

The traffic service cooperation support device 100 stores the traffic service plan information received from the traffic service planning terminal 106 related to the second traffic service in the second traffic service plan information 2.

### (Service Level Threshold Information)

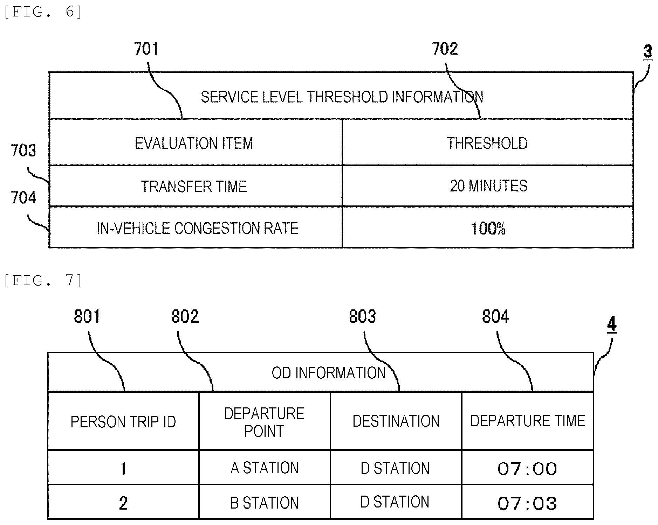

FIG. 6 is a diagram illustrating an example of the service level threshold information 3. The service level threshold information 3 is information in which contents of a lowest request (a threshold) of a service level applied to a traffic service is stored for each item. The service level threshold information 3 includes data items of an evaluation item 701 for setting a viewpoint (for example, a transfer time and an in-vehicle congestion rate) for evaluating quality of a service, and a threshold 702 for setting a threshold used to determine whether the quality of the service satisfies a predetermined reference. In the figure, a record 703 of an item related to an upper limit of a transfer time of a transportation mode at a boarding and alighting point and a record 704 of an item related to an upper limit of a congestion rate of a transportation mode are registered.

### (OD Information)

FIG. 7 is a diagram illustrating an example of the OD information 4 (OD: origin destination). The OD information 4 is information indicating a travel demand of a passenger, and includes information related to a future predicted travel demand. The OD information 4 includes data items of a person trip ID 801 for setting identification information of a passenger, a departure point 802 for setting a departure point for a passenger, a destination 803 for setting a destination for a passenger, and a departure time 804 for setting a departure time from a departure point for a passenger. The OD information 4 is acquired from an external database, a server device, or the like as needed and is updated.

### (First Traffic Service Provision History Information)

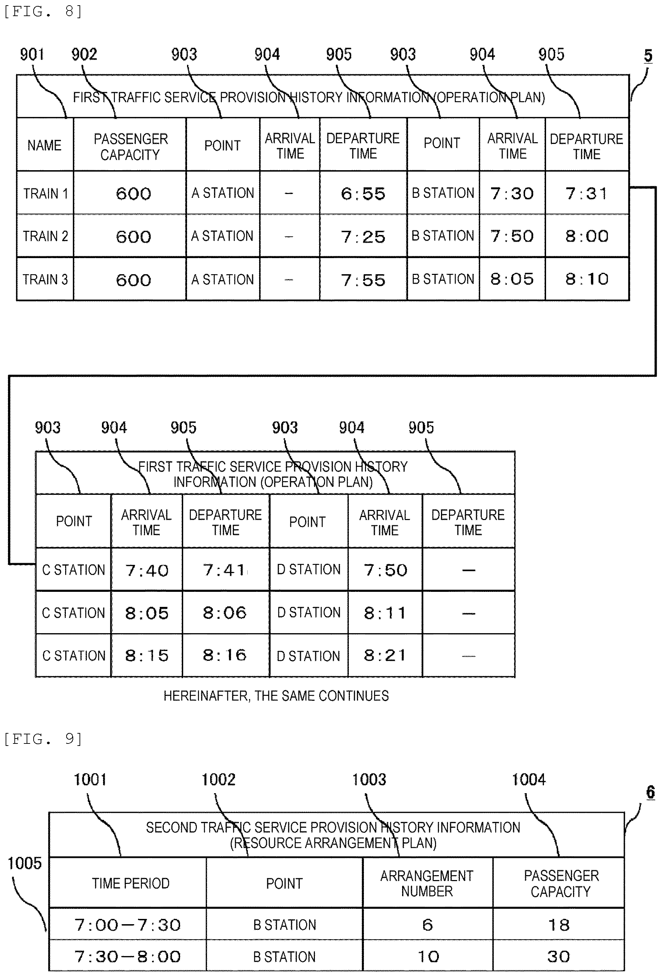

FIG. 8 is a diagram illustrating an example of the first traffic service provision history information 5. The first traffic service provision history information 5 is information on provision records of the first transportation mode by the first traffic service. The first traffic service provision history information 5 has a data structure similar to that of the first traffic service plan information 1, and is a database including data items of a name 901 for setting a name of the first transportation mode (a train name, a flight number, or the like), a transportable passenger 902 for setting the number of passengers that can be transported by the first transportation mode (the passenger capacity), a point 903 for setting a boarding and alighting point of a passenger in the first transportation mode, an arrival time 904 for setting an arrival time at the boarding and alighting point, and a departure time 905 for setting a departure time from the boarding and alighting point. The first traffic service provision history information 5 illustrated in the figure is an example when the first transportation mode is railway. For the point 903, the arrival time 904, and the departure time 905, when a transportation mode transports passengers from a departure point to a destination via a plurality of points, information is set for each point.

The traffic service cooperation support device 100 stores, in the first traffic service provision history information 5, operation status information of each transportation mode up to a current time point, which is received from the traffic service planning terminal 106 related to the first traffic service.

### (Second Traffic Service Provision History Information)

FIG. 9 is a diagram illustrating an example of the second traffic service provision history information 6. The second traffic service provision history information 6 is information on provision records of the second transportation mode by the second traffic service. The second traffic service provision history information 6 has a data structure similar to that of the second traffic service plan information 2, and is a database including data items of a time period 1001 for setting a time period in which the second transportation mode is arranged, a point 1002 for setting a boarding point of the second transportation mode (that is, a point where the second transportation mode is arranged) in the time period, an arrangement number 1003 for setting the number of the second transportation mode present at the boarding point, and a transportable passenger 1004 for setting the number of passengers that can be transported by the second transportation mode (the passenger capacity).

The traffic service cooperation support device 100 stores, in the second traffic service provision history information 6, operation status information of each transportation mode up to a current time point, which is received from the traffic service planning terminal 106 related to the second traffic service.

Functions of functional units of the traffic service cooperation support device 100 described above are implemented by the calculation unit 104 of the traffic service cooperation support device 100 reading predetermined programs that are stored in the storage unit 105 and are used for implementing the functions of the functional units. The programs can be recorded on, for example, a recording medium and distributed. All or a part of the traffic service cooperation support device 100 may be implemented using a virtual information processing resource provided by using a virtualization technique, a process space separation technique, or the like, such as a virtual server provided by a cloud system. All or a part of functions provided by the traffic service cooperation support device 100 may be implemented by, for example, a service provided by a cloud system via an application programming interface (API) or the like.

Next, processing executed by the traffic service cooperation support device 100 will be described.

### Traffic Service Cooperation Support Processing

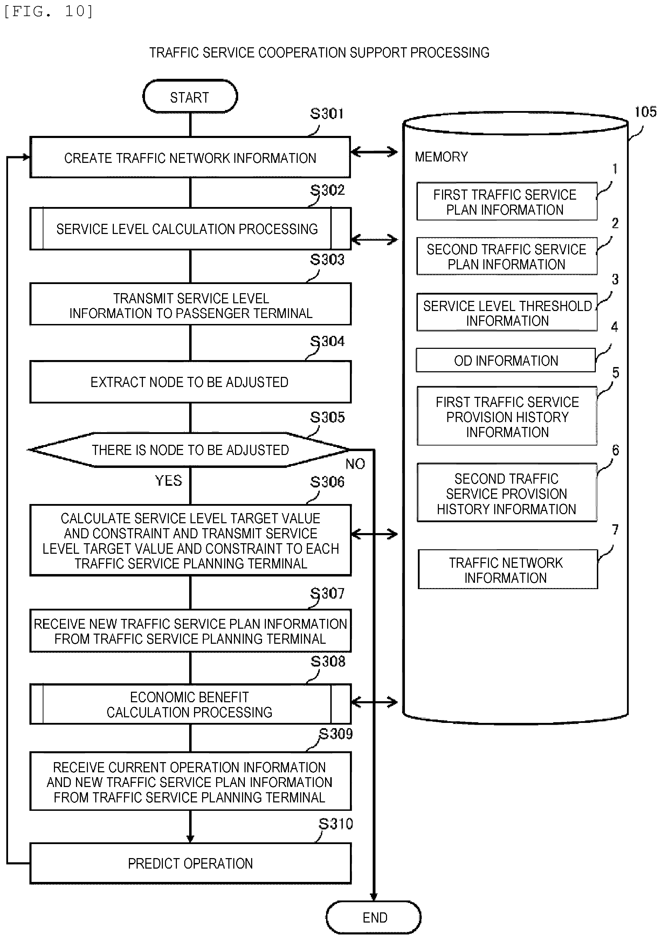

FIG. 10 is a flowchart illustrating traffic service cooperation support processing according to the first embodiment. The traffic service cooperation support processing is started, for example, at a predetermined timing (for example, a predetermined time, a predetermined time interval, or a timing at which a user performs a predetermined input to the traffic service cooperation support device 100), or is started when the traffic service cooperation support device 100 receives the traffic service plan information from the traffic service planning terminal 106.

As illustrated in FIG. 10, the traffic service cooperation support device 100 first creates the traffic network information 7 (S301). Specifically, the traffic service cooperation support device 100 creates the traffic network information 7 while specifying a boarding and alighting point for a passenger and a transportation route for a passenger of each transportation mode in each traffic service based on the first traffic service plan information 1 and the second traffic service plan information 2.

### (Traffic Network Information)

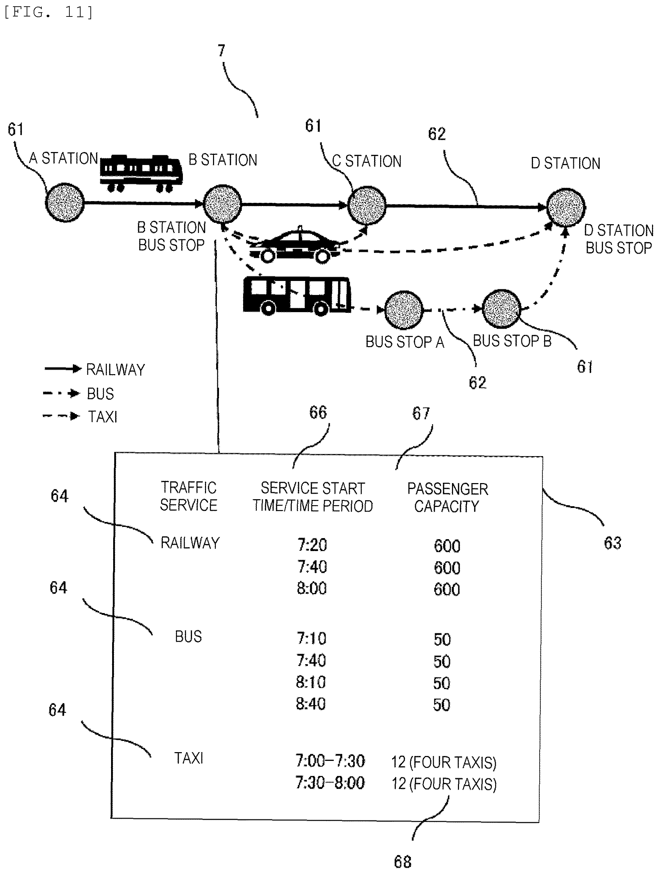

FIG. 11 is a diagram illustrating an example of the traffic network information 7. The traffic network information 7 includes a node 61 (in the figure, a train station, a boarding and alighting point of a taxi, or a bus stop) indicating a boarding and alighting point related to each transportation mode, and a link 62 (in the figure, a train route, a bus route, or a taxi route) indicating a route of each transportation mode between the boarding and alighting points. The nodes 61 are connected by the link 62.

The node 61 is associated with attribute information 63. The attribute information 63 includes service information 64 provided by a transportation mode (railway, bus, or the like) in each traffic service associated with the node 61. The attribute information 63 includes service level information to be described later.

In the present embodiment, the service information 64 includes a departure time or a departure time period 66 of each transportation mode, and the passenger capacity 67 of each transportation mode (when there are a plurality of the second transportation mode, the number of the second transportation mode 68).

The link 62 is also associated with attribute information (not illustrated). The attribute information is, for example, information on fare and time required for traveling between the nodes 61 connected by the link 62 (fare and time required by each transportation mode).

Returning to the description of FIG. 10. After creating the traffic network information 7 in S301, the traffic service cooperation support device 100 executes service level calculation processing S302 of calculating a service level of each traffic service based on the OD information 4, the traffic network information 7, and the like. Details of the service level calculation processing S302 will be described later.

Subsequently, the traffic service cooperation support device 100 transmits information on the service level of each traffic service calculated in the service level calculation processing S302 to each passenger terminal 110 (S303). The passenger terminal 110 displays the received information on the service level on a screen.

Based on the information on the service level (service level information) calculated in the service level calculation processing S302, the traffic service cooperation support device 100 extracts a boarding and alighting point (a transfer point) where there is trouble in passenger transfer caused by a change in a traffic service plan due to an operation disturbance, a schedule change, or the like (S304). That is, the traffic service cooperation support device 100 extracts all of the nodes 61 (nodes to be adjusted) at a transfer point where there is a traffic service (a transportation mode) for which the service level calculated in the service level calculation processing S302 does not satisfy a service level threshold (S304).

In the present embodiment, the node to be adjusted is extracted based on a transfer time in the service level information. Specifically, the traffic service cooperation support device 100 refers to the record 703 of a transfer time in the service level threshold information 3 to determine a threshold (20 minutes) of a transfer time serving as a reference, and refers to transfer information of each node 61 calculated in the service level calculation processing S302 to extract all of the nodes 61 in which there is a passenger whose transfer time exceeds the threshold.

A reference service level for extracting a node to be adjusted is not limited to the transfer time, and may be, for example, an in-vehicle congestion rate.

The traffic service cooperation support device 100 executes processing in S306 when the node to be adjusted is extracted (S305: YES), and ends the traffic service cooperation support processing when the node to be adjusted is not extracted (S305: NO).

In S306, the traffic service cooperation support device 100 first calculates a service level target value for each node to be adjusted extracted in S304.

In the present embodiment, the service level target value is the number of passengers who get off at a transfer point and transfer to a transportation mode of another traffic service (that is, the number of transported passengers who need to transfer at the transfer point). Specifically, the traffic service cooperation support device 100 specifies the number of transfer passengers in the service level information calculated in the service level calculation processing S302 for each node to be adjusted extracted in S304 in each time period.

The calculated service level target value is not limited to the one illustrated here. For example, the service level target value may be an in-vehicle congestion rate.

Further, the traffic service cooperation support device 100 refers to the first traffic service plan information 1 and the second traffic service plan information 2 to calculate a constraint that is related to a service level and is to be applied only to a predetermined traffic service among a plurality of traffic services.

In the present embodiment, the traffic service cooperation support device 100 calculates, as the constraint, a minimum value of the number of passengers to be transported (a minimum number of transfer passengers) by a mass transit service at a transfer point. Specifically, first, the traffic service cooperation support device 100 calculates, for each node to be adjusted, a total value in all traffic services of the above calculated number of transfer passengers at the transfer point, and subtracts, from the calculated total value, a total value of the passenger capacity of a traffic service other than the mass transit service (acquired from the transportable passenger 402 in the first traffic service plan information 1 and the transportable passenger 604 in a record of the second traffic service plan information 2), thereby calculating the minimum number of transfer passengers to be transported by the mass transit service.

Contents of the constraint are not limited to those illustrated here. For example, a traffic service for which the constraint is set may be a traffic service based on another reference, instead of a traffic service such as a mass transit service in which the passenger capacity is large. In addition, a parameter related to the constraint may be, for example, an in-vehicle congestion rate instead of the number of passengers to be transported.

The traffic service cooperation support device 100 transmits the service level target value (the target value of the number of transfer passengers) and the constraint (the minimum number of transfer passengers to be transported by the mass transit service) of each traffic service specified as described above to the traffic service planning terminal 106 of each traffic service.

Thereafter, the traffic service planning terminal 106 of each traffic service creates new traffic service plan information based on the service level target value and the constraint received from the traffic service cooperation support device 100. The traffic service planning terminal 106 transmits the created traffic service plan information to the traffic service cooperation support device 100.

For example, the traffic service planning terminal 106 displays the received target value of the number of transfer passengers and the minimum number of transfer passengers to be transported by the mass transit service, and displays an edit screen for receiving an input of traffic service plan information (for example, an operation plan or a vehicle dispatch plan of each transportation mode (information corresponding to the first traffic service plan information 1 or the second traffic service plan information 2)) from a user. Alternatively, the traffic service planning terminal 106 may automatically create the traffic service plan information based on the received target value and constraint of the minimum number of transfer passengers to be transported by the mass transit service. The traffic service planning terminal 106 may create the traffic service plan information that does not necessarily achieve the received service level target value or conform to the received constraint based on a policy of a traffic service provider. Further, the traffic service planning terminal 106 may control traveling of the transportation mode 108 based on the created new traffic service plan information.

The traffic service cooperation support device 100 receives the new traffic service plan information from the traffic service planning terminal 106 of each traffic service (S307).

Based on the received new traffic service plan information, the traffic service cooperation support device 100 executes economic benefit calculation processing S308 of calculating an economic benefit obtained by providing an additional traffic service in addition to a new traffic service plan for each traffic service and transmitting the economic benefit to the traffic service planning terminal 106 of each traffic service. Details of the economic benefit calculation processing S308 will be described later.

Thereafter, the traffic service planning terminal 106 of each traffic service creates new traffic service plan information again based on the received economic benefit information. Similar to S306, the traffic service planning terminal 106 of each traffic service may display an edit screen for displaying the received economic benefit information, or may automatically create new traffic service plan information. The traffic service planning terminal 106 may control traveling of the transportation mode 108 based on the created traffic service plan information.

Further, the traffic service planning terminal 106 of each traffic service acquires current operation status information of each transportation mode of the traffic service from a predetermined device or a database.

Then, the traffic service planning terminal 106 of each traffic service transmits the operation status information of each transportation mode and the new traffic service plan information to the traffic service cooperation support device 100.

In S309, the traffic service cooperation support device 100 receives the current operation status information of the transportation mode and the new traffic service plan information from the traffic service planning terminal 106. The traffic service cooperation support device 100 stores the received operation status information in the first traffic service provision history information 5 and the second traffic service provision history information 6. The traffic service cooperation support device 100 stores the received traffic service plan information in the first traffic service plan information 1 and the second traffic service plan information 2.

The traffic service cooperation support device 100 predicts an operation status of a transportation mode in each traffic service based on the received operation status information and the traffic service plan information (the first traffic service plan information 1 and the second traffic service plan information 2) received in S307 or S309 (S310).

The prediction of the operation status can be performed by a known mathematical optimization method based on a concept of a program evaluation and review technique (PERT) or the like. For example, the traffic service cooperation support device 100 creates a mixed integer programming problem in which a schedule of each transportation mode (an arrival time at each boarding and alighting point and a departure time from each boarding and alighting point) is set as a determination variable, a constraint on an operation of each transportation mode (for example, a minimum required time, a return time, and a station number) is set as a constraint, and a sum of determination variables is set as an objective function, and calculates a combination of values of the determination variables that minimizes a value of the objective function while satisfying all constraints. Thereafter, the processing in S301 is repeated.

Here, details of the service level calculation processing S302 will be described.

### Service Level Calculation Processing

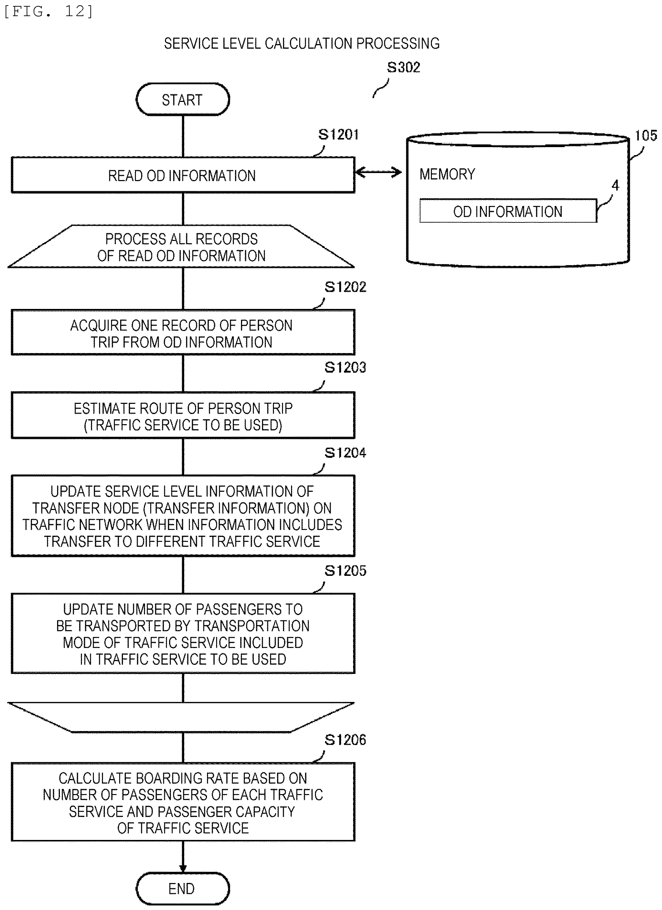

FIG. 12 is a flowchart illustrating details of the service level calculation processing S302. First, the service level calculation unit 202 acquires the OD information 4 (S1201).

Subsequently, the service level calculation unit 202 selects one person trip (information on a travel demand related to one traveler) in the acquired OD information 4 (S1202).

The service level calculation unit 202 further acquires OD information of the selected person trip (a record of the OD information 4 related to the selected person trip) (S1202).

The service level calculation unit 202 estimates a traffic service to be used by a traveler related to the selected person trip based on the OD information acquired in S1202 (S1203).

With respect to a departure point and a destination in the OD information acquired in S1202, for example, the service level calculation unit 202 searches for all routes (patterns of the nodes 61) from the departure point to the destination by referring to the traffic network information 7 and calculates an evaluation value for each route. Here, the evaluation value is an evaluation value (for example, fare or time required for travel) indicated by the attribute information of the link 62.

Then, the service level calculation unit 202 specifies a route having a highest evaluation value among the searched routes as a route (a traffic service) to be used by the traveler. An existing algorithm for solving a shortest route problem such as dynamic programming can be used as a method of obtaining a route.

When searching for a route from one of the nodes 61 (a first node) to another one of the nodes 61 (a second node), a transportation mode to be used for traveling along the route is a transportation mode that departs from the first node at an earliest time after an arrival time of the traveler at the first node, but when the number of passengers of the transportation mode exceeds the passenger capacity, the transportation mode to be used for traveling along the route is a transportation mode that departs from the first node at a subsequent earliest time (for example, when a passenger cannot get on a certain train, the passenger gets on a subsequent train). The number of passengers to be transported by a transportation mode can be calculated by, when a route having a highest evaluation value is specified for each traveler, adding the number of travelers to the number of passengers of each transportation mode used for traveling along the route. A mass transit service may be preferentially used as a priority among traffic services.

The service level calculation unit 202 creates or updates service level information, which is information including a service level at a transfer point (a transfer node) where a passenger transfers between travel modes of different traffic services, for the route of each traveler specified in S1203 (S1204).

### (Service Level Information)

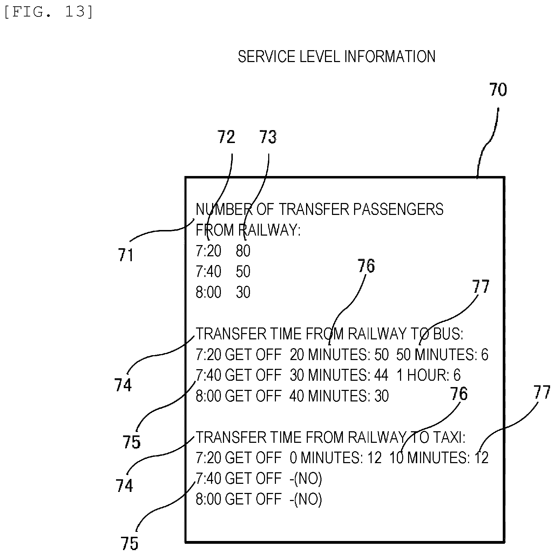

FIG. 13 is a diagram illustrating an example of the service level information 70 associated with one of the nodes 61. The service level information 70 includes information 71 (including an arrival time period 72 at a transfer point and the number of transfer passengers 73) of all passengers who arrive at a transfer node (a transfer point) and need to be transferred to a transportation mode of another traffic service, and passenger transfer information 74 (an arrival time period 75 at a transfer point, a transfer time 76 required for transferring to a transfer destination traffic service, and the number of transfer passengers 77 at the transfer time) for each transfer destination traffic service. For example, in the case of the example illustrated in FIG. 13, the number of transfer passengers from a train arriving on 7:20 is 80 in total. Among the transfer passengers, for passengers to be transferred to a bus, the number of transfer passengers is 50 in the case of a transfer time of 20 minutes and the number of transfer passengers is 6 in the case of a transfer time of 50 minutes, and for passengers to be transferred to a taxi, the number of transfer passengers is 12 in the case of a transfer time of 0 minutes and the number of transfer passengers is 12 in the case of a transfer time of 10 minutes.

The service level information 70 described here is information of a service level that is related to the number of transfer passengers and a transfer time and includes information related to all passengers who need to be transferred as a calculation basis. Alternatively, the service level information 70 may be information of another type of service level such as an in-vehicle congestion rate.

Next, as illustrated in FIG. 12, the service level calculation unit 202 updates the number of passengers of each transportation mode related to the related traffic service based on a transfer status calculated in the processing of S1204 (S1205).

The service level calculation unit 202 repeats the processing in S1202 to S1205 for all person trips in the OD information.

Thereafter, the service level calculation unit 202 divides the number of passengers of each transportation mode calculated in S1205 by the passenger capacity of each transportation mode (the transportable passenger 402 in the first traffic service plan information 1 or the transportable passenger 604 in the second traffic service plan information 2), thereby calculating a boarding rate (an in-vehicle congestion rate) of each transportation mode, and the service level calculation unit 202 stores the boarding rate (S1206). Then, the service level calculation processing S302 ends.

Next, details of the economic benefit calculation processing S308 will be described.

### Economic Benefit Calculation Processing

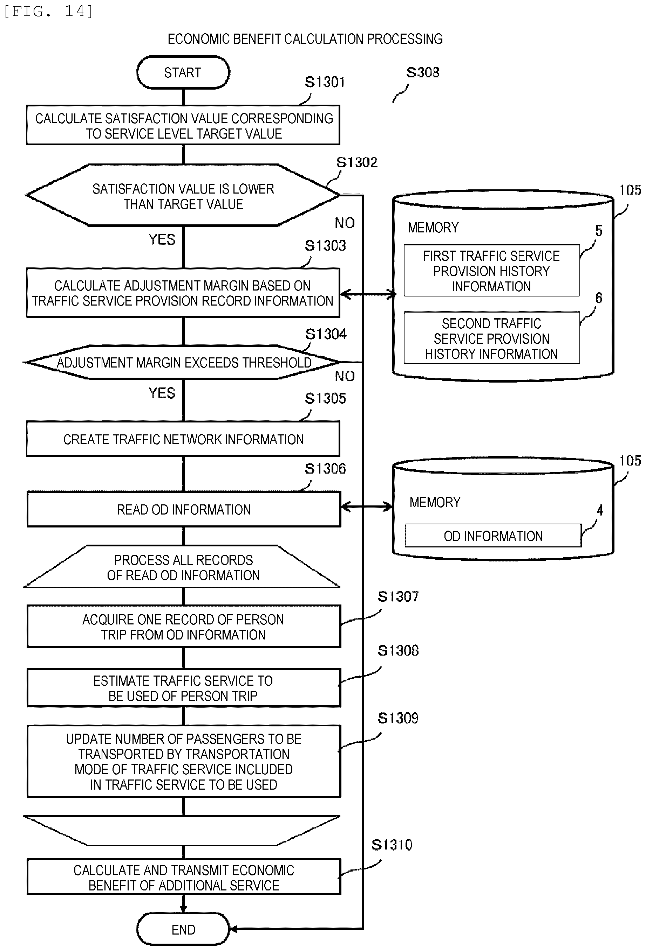

FIG. 14 is a flowchart illustrating details of the economic benefit calculation processing S308.

First, the economic benefit calculation unit 205 calculates a service level (hereinafter, referred to as a satisfaction value) of a traffic service that can be currently provided for all traffic services by using the new traffic service plan information (the first traffic service plan information 1 and the second traffic service plan information 2) of each traffic service received in S307 (S1301).

In the present embodiment, the economic benefit calculation unit 205 calculates a maximum number of transfer passengers at a transfer point as the satisfaction value. Specifically, the economic benefit calculation unit 205 sums up all values of the transportable passenger 402 in the first traffic service plan information 1 and the transportable passenger 604 in the second traffic service plan information 2 at the transfer point.

A service level used for the satisfaction value may be an in-vehicle congestion rate or the like other than the number of transfer passengers.

The economic benefit calculation unit 205 determines whether the satisfaction value calculated in S1301 exceeds a service level target value (S1302). For example, the economic benefit calculation unit 205 determines whether the satisfaction value calculated in S1301 exceeds a target value of the number of transfer passengers specified in S306.

When the satisfaction value is lower than the service level target value (S1302: YES), the economic benefit calculation unit 205 executes processing in S1303, and when the satisfaction value is not lower than the service level target value (S1302: NO), the economic benefit calculation unit 205 ends the economic benefit calculation processing S308.

In S1303, the economic benefit calculation unit 205 creates information on a traffic service (hereinafter, referred to as an adjustment margin) predicted to be able to be added in order to make the service level reach the satisfaction value.

Specifically, first, the economic benefit calculation unit 205 extracts, for the first traffic service, the first transportation mode that departs from a transfer point and carries transfer passengers from past operation information and the new traffic service plan information. That is, the economic benefit calculation unit 205 refers to the point 903 and the departure time 905 in the first traffic service provision history information 5 to extract all of the first transportation mode for which the node 61 related to a boarding and alighting point, of which the service level is calculated in the service level calculation processing S302, is set as a departure point from the boarding and alighting point. The economic benefit calculation unit 205 refers to the new traffic service plan information received earlier to extract all of the first transportation mode for which the boarding and alighting point of which the service level is calculated in the service level calculation processing S302 is set as a departure point.

Similarly, the economic benefit calculation unit 205 extracts, for the second traffic service, the second transportation mode that departs from a transfer point and carries transfer passengers from the past operation information and the new traffic service plan information. That is, the economic benefit calculation unit 205 refers to the point 1002 in the second traffic service provision history information 6 to extract all of the second transportation mode for which the node 61 related to a boarding and alighting point, of which the service level is calculated in the service level calculation processing S302, is set as a boarding and alighting point. The economic benefit calculation unit 205 refers to the new traffic service plan information received earlier to extract all of the second transportation mode for which the boarding and alighting point of which the service level is calculated in the service level calculation processing S302 is set as a departure point.

Then, the economic benefit calculation unit 205 calculates or estimates a transportation capacity of a transportation mode extracted from the past operation information and a transportation capacity of a transportation mode extracted from the new traffic service plan information based on past operation data and the new traffic service plan information. That is, the economic benefit calculation unit 205 acquires the passenger capacity of each transportation mode in the extracted first traffic service provision history information 5 and second traffic service provision history information 6 based on the transportable passengers 902 in the first traffic service provision history information 5 and the transportable passengers 1004 in the second traffic service provision history information 6, and sums up the acquired passenger capacity for each time period of the node 61. The economic benefit calculation unit 205 sums up the passenger capacity of each transportation mode in the extracted new traffic service plan information for each time period.

Then, the economic benefit calculation unit 205 sets, as the adjustment margin, a value obtained by subtracting a transportation capacity estimated based on the traffic service plan information (a total value of the passenger capacity based on the new traffic service plan information) from a transportation capacity calculated based on the past operation information (a total value of the passenger capacity based on the traffic service provision history information).

Next, the economic benefit calculation unit 205 determines whether the adjustment margin calculated in S1303 exceeds a predetermined threshold (S1304). When the adjustment margin for a certain traffic service exceeds the predetermined threshold value (S1304: YES), the economic benefit calculation unit 205 executes processing in S1305. When there is no traffic service of which the adjustment margin exceeds the predetermined threshold (S1304: NO), the economic benefit calculation unit 205 ends the economic benefit calculation processing S308.

In S1305, the economic benefit calculation unit 205 creates the traffic network information 7 by the same processing as in S301 based on the new traffic service plan information (and the adjustment margin) received in S307.

In S1306 to S1309, the economic benefit calculation unit 205 estimates a passenger travel route (a traffic service to be used) and calculates the number of passengers of each transportation mode in the travel route by executing the same processing as in S1201 to S1203 and S1205 in the service level calculation processing S302.

Based on the number of passengers of each transportation mode calculated in the processing up to S1309, the economic benefit calculation unit 205 calculates an economic benefit obtained by adding the adjustment margin to a traffic service indicated by the new traffic service plan information received in S307 for each traffic service of which the adjustment margin exceeds the predetermined threshold, and transmits the economic benefit to the traffic service planning terminal 106 of the traffic service of which the adjustment margin exceeds the threshold (S1310).

For example, the economic benefit calculation unit 205 calculates a value by subtracting the number of passengers of each transportation mode calculated in the processing in S1306 to S1309 from the number of passengers of each transportation mode calculated in the service level calculation processing S302, and calculates an economic benefit by multiplying the calculated value by a predetermined conversion coefficient. The conversion coefficient may be based on an index of an economic benefit. For example, when a fare revenue is used as an economic index, a fare of each traffic service is set as a conversion coefficient, and when the number of passengers is used as an economic index, the conversion coefficient is 1. Other factors such as an economic benefit that differs for each station may be taken into consideration in the conversion coefficient.

After the processing in S1310 ends, the economic benefit calculation unit 205 ends the economic benefit calculation processing S308.

### Second Embodiment

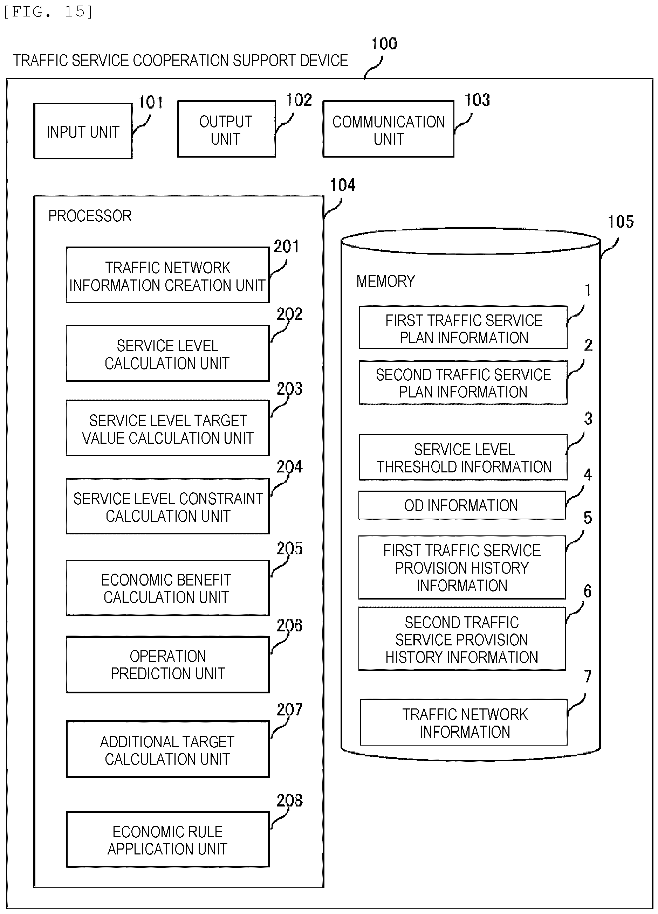

FIG. 15 is a diagram illustrating hardware and functions of the traffic service cooperation support device 100 according to a second embodiment. As compared with the first embodiment, the traffic service cooperation support device 100 further includes functional units of an additional target calculation unit 207 and an economic rule application unit 208.

The additional target calculation unit 207 determines whether the new evaluation value (the service level) calculated in the service level calculation processing S302 reaches the service level target value. When the service level does not reach the service level target value, the additional target calculation unit 207 transmits an additional service level necessary for making the service level reach the service level target value to the traffic service planning terminal 106.

When the economic rule application unit 208 receives, from the traffic service planning terminal 106, information (traffic service plan information) in which traffic service plan information is further added to the new traffic service plan information received in S307 or S309, the economic rule application unit 208 sets economic consideration information corresponding to a transportation service indicated by the added information in association with the traffic service planning terminal 106.

The economic rule application unit 208 determines whether the new evaluation value (the service level) calculated in the service level calculation processing S302 reaches the service level target value. When the service level does not reach the service level target value, the economic rule application unit 208 sets economic penalty information corresponding to an amount that the service level does not reach the service level target value in association with the traffic service planning terminal 106.

### Traffic Service Cooperation Support Processing

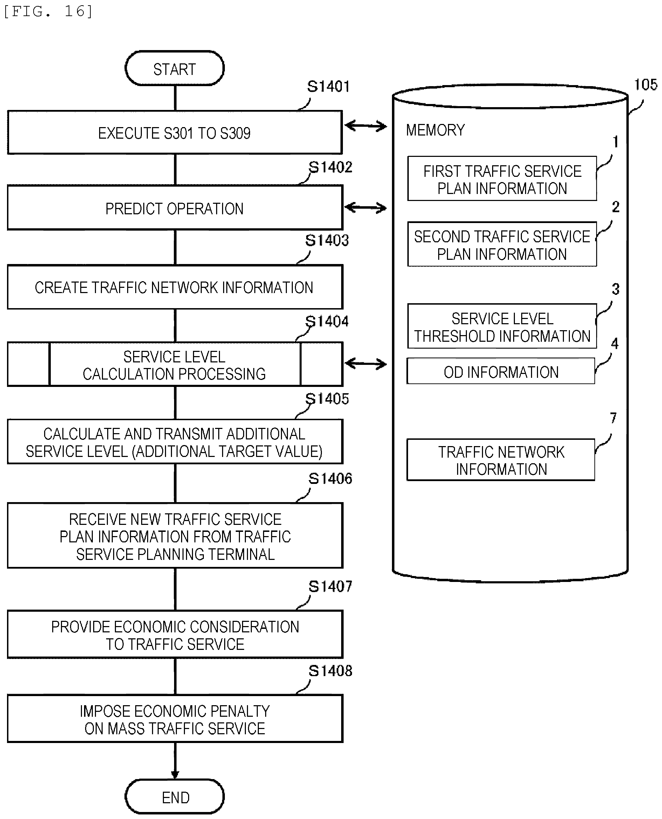

FIG. 16 is a flowchart illustrating traffic service cooperation support processing according to the second embodiment. First, the traffic service cooperation support device 100 executes processing the same as those in S301 to S309 in the first embodiment (S1401).

Similar to the processing in S310 of the first embodiment, the operation prediction unit 206 predicts an operation status of a transportation mode in each traffic service based on the current operation status information and the new traffic service plan information received from each traffic service planning terminal 106 in S1401 (S307 and S309) (S1402).

The traffic network information creation unit 201 updates the traffic network information 7 based on a prediction result of S1402 (S1403). For example, the traffic network information creation unit 201 creates the traffic network information 7 based on operation plan information (including the information received in S1402) of each transportation mode in each traffic service and past operation record information.

The service level calculation unit 202 calculates a service level of each traffic service by executing the service level calculation processing S302 based on the traffic network information 7 created in S1403 (S1404).

When a current service level does not reach the service level target value, the additional target calculation unit 207 calculates a service level (an additional target value) for setting the current service level to the service level target value based on the service level (the service level information) calculated in S1404, and transmits information related to the calculated service level to each traffic service planning terminal 106 (S1405) .

Specifically, the additional target calculation unit 207 searches for each traffic service of each node 61 in which the service level with the number of transfer passengers calculated in S1404 is lower than the service level with the number of transfer passengers calculated in S306. When a traffic service can be retrieved, for the traffic service of the node 61, the additional target calculation unit 207 sets, as an additional target value, a value obtained by subtracting the service level with the number of transfer passengers calculated in S1404 from the service level target value (a target value of the number of transfer passengers) calculated in S306, and transmits the additional target value to the corresponding traffic service planning terminal 106.

Thereafter, the traffic service planning terminal 106 creates new traffic service plan information (by the same processing as that described in S306 of the first embodiment) based on the additional target value of the service level received from the traffic service cooperation support device 100. The traffic service cooperation support device 100 transmits the created traffic service plan information to the traffic service cooperation support device 100. Further, the traffic service planning terminal 106 may control traveling of the transportation mode 108 based on the created new traffic service plan information.

The additional target calculation unit 207 waits for reception of new traffic service plan information from the traffic service planning terminal 106 (S1406).

When the additional target calculation unit 207 receives the traffic service plan information in S1406, the economic rule application unit 208 determines whether the received traffic service plan information includes information (specifically, a new transportation mode that departs from a transfer point and can transport a passenger to be transferred at the transfer point) added to a traffic service at a transfer point, which is information not present in the traffic service plan information previously received in S307 or S309. When the received traffic service plan information does not include information of a new transportation mode, the economic rule application unit 208 generates a consideration corresponding to the new transportation mode, and provides the generated consideration to the traffic service planning terminal 106 (a traffic service provider) of a traffic service related to the new transportation mode (S1407).

Specifically, at each node 61 related to a boarding and alighting point (a transfer point) of the new transportation mode, the economic rule application unit 208 calculates, for each traffic service, a consideration corresponding to the number of transfer passengers of a transportation mode that departs from the node 61. For example, the economic rule application unit 208 calculates a consideration of a transportation mode by multiplying the number of transfer passengers by a predetermined coefficient (for example, a value based on an operation cost related to transportation of one passenger).

Then, the economic rule application unit 208 provides the calculated consideration for each traffic service to the traffic service planning terminal 106 (a traffic service provider). For example, the economic rule application unit 208 registers (electronically transmits) information such as money or points corresponding to the calculated consideration in the traffic service planning terminal 106 or another device related to the traffic service provider.

Further, the economic rule application unit 208 determines whether the traffic plan service information received up to S1406 satisfies a constraint for a predetermined traffic service for which the constraint is set in S306.

In the present embodiment, the economic rule application unit 208 determines whether the number of transfer passengers in traffic service plan information of a mass transit service exceeds a minimum value of the number of transfer passengers imposed on the mass transit service as a constraint.

Then, when there is a traffic service that does not satisfy the constraint, the economic rule application unit 208 imposes a penalty on the traffic service planning terminal 106 (a traffic service provider) related to the traffic service according to a degree at which the traffic service does not satisfy the constraint (S1407).

In the present embodiment, for a mass transit service that does not satisfy the constraint, the economic rule application unit 208 subtracts the number of transfer passengers in the traffic service plan information of the mass transit service from a minimum value (that is, a value imposed as the constraint) of the number of transfer passengers of the mass transit service. Then, the economic rule application unit 208 calculates a penalty value by multiplying the calculated subtraction value by a predetermined coefficient. The economic rule application unit 208 stores the calculated penalty value, or registers the penalty value in the traffic service planning terminal 106 or another device related to a mass transit service provider. Then, the traffic service cooperation support processing ends.

The coefficient here does not need to be the same as the coefficient in S1407. For example, the penalty value may be set to be larger than the consideration for equivalent deviation from the constraint.

### Third Embodiment

Different from the first embodiment and second embodiment, the traffic service cooperation support device 100 creates the traffic network information 7 by predicting an operation of each traffic service in a third embodiment.

### Traffic Service Cooperation Support Processing

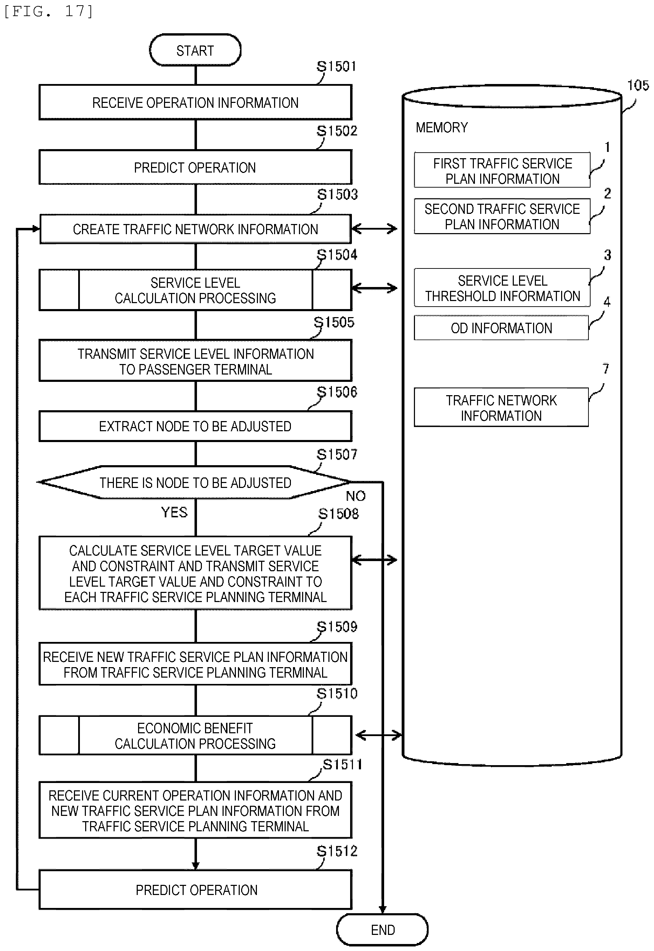

FIG. 17 is a flowchart illustrating traffic service cooperation support processing according to the third embodiment.

The traffic service cooperation support device 100 receives current operation status information of each traffic service from the traffic service planning terminal 106 of each traffic service (S1501).

The traffic service cooperation support device 100 predicts an operation plan of each traffic service based on the operation status information received in S1501, the first traffic service plan information 1, and the second traffic service plan information 2 (S1502). This prediction can be performed by the same method as that described in S310.

Thereafter, processing in S1503 to S1512 is the same as the processing in S301 to S310 in the first embodiment.

As described above, the service level is calculated by predicting an operation based on an operation status, and the service level target value is transmitted to the traffic service planning terminal 106, thereby enabling traffic service providers to cooperate with one another in the present embodiment.

As described above, the traffic service cooperation support device 100 according to the present embodiment calculates the evaluation value (the service level) related to a transportation service for a passenger at a transfer point based on the traffic service plan information received from each traffic service planning terminal 106 and the OD information 4. When the calculated service level does not satisfy a predetermined condition, the traffic service cooperation support device 100 calculates a target value related to the transportation service of each transportation mode of each traffic service at the transfer point based on the OD information 4, and transmits the calculated target value to each traffic service planning terminal 106.

That is, the traffic service cooperation support device 100 according to the present embodiment aggregates service plans of traffic services, and feeds back the service level target value to be achieved at the transfer point by each traffic service to a traffic service provider.

Accordingly, traffic service providers can cooperate with one another to cope with an operation failure or the like occurring at the transfer point. In this manner, the traffic service cooperation support device 100 according to the present embodiment enables traffic services to efficiently cooperate with one another while maintaining autonomy of each traffic service provider.

The traffic service cooperation support device 100 according to the present embodiment creates the traffic network information 7 including a departure time and the passenger capacity of a transportation mode at each boarding and alighting point based on the traffic service plan information received from each traffic service planning terminal 106, and calculates a transfer time for a passenger at the transfer point as a service level based on the traffic network information 7. When the calculated transfer time is a predetermined time or more, the traffic service cooperation support device 100 calculates a target value of the number of transfer passengers at the transfer point based on the number of transfer passengers calculated based on the OD information 4.

As described above, when the transfer time at the transfer point is long, the number of transfer passengers at the transfer point is set as the service level target value based on the traffic network information 7 and the OD information 4, and a transportation capacity corresponding to a travel demand is provided, so that a problem of stranded transfer passengers at the transfer point can be eliminated.

The traffic service cooperation support device 100 according to the present embodiment calculates a request (a constraint) of a transportation service for a predetermined traffic service together with the service level target value, and transmits the calculated constraint to the traffic service planning terminal 106 of the predetermined traffic service. When new traffic service plan information received from the traffic service planning terminal 106 does not include information satisfying the constraint, the traffic service cooperation support device 100 transmits economic benefit information obtained by providing an additional traffic service to each traffic service planning terminal 106 (may be the traffic service planning terminal 106 other than the traffic service planning terminal 106 of the predetermined traffic service).

Accordingly, in a case where there is the traffic service planning terminal 106 (a traffic service provider) that returns traffic service plan information that does not satisfy the constraint, in order to compensate for the lack of transportation capacity due to the failure to meet the constraint, economic incentives in a case where an additional traffic service is provided are transmitted to any one of the traffic service planning terminals 106 (for example, the traffic service planning terminal 106 of a provider that can provide a traffic service that satisfies the constraint), thereby maintaining service levels of all traffic services.

In particular, the traffic service cooperation support device 100 according to the present embodiment calculates a minimum number of passengers to be transferred to a transportation mode of a mass transit service at a transfer point. When the new traffic service plan information received from the traffic service planning terminal 106 of the mass transit service is not information indicating a plan in which passengers in the number equal to or larger than the minimum number of transfer passengers can be transferred, the traffic service cooperation support device 100 transmits economic benefit information obtained by providing an additional transportation service to each traffic service planning terminal 106.

As described above, transportation capacities of all traffic services can be maintained by imposing a constraint on a traffic service having a large transportation capacity such as a mass transit service.

The traffic service cooperation support device 100 according to the present embodiment calculates a new evaluation value (a service level) related to all transportation services for a passenger at a transfer point based on the new traffic service plan information received from the traffic service planning terminal 106 of a traffic service provider and the OD information 4. When the calculated service level does not reach a target value related to service levels of all traffic services, the traffic service cooperation support device 100 calculates a transportation service and a transportation capacity that are estimated to be able to be additionally provided in order to reach the target value and an economic benefit obtained from the transportation service and the transportation capacity based on operation information of a traffic service, and transmits the economic benefit information to the traffic service planning terminal 106 related to the transportation service that is estimated to be able to be additionally provided.

As described above, when the service level of the new traffic service plan information received from the traffic service planning terminal 106 of the traffic service provider is added and service levels of all transportation services do not reach the target value, economic incentives can be transmitted to a traffic service provider estimated to have a provision margin (an adjustment margin) of a transportation service to facilitate the provision of a transportation service to be added, thereby maintaining the service levels of all transportation services.

In particular, the traffic service cooperation support device 100 according to the present embodiment calculates the number of transfer passengers (a service level) at a transfer point to be transferred to a transportation mode of a traffic service of a traffic service provider based on the traffic service plan information received from the traffic service planning terminal 106 of the traffic service provider and the OD information 4, and calculates a target value and the like based on the number of transfer passengers.

As described above, the service level target value is set as the number of transfer passengers at a transfer point, which is calculated based on the OD information 4, and the passenger capacity of the traffic service provider from the transfer point is calculated based on operation information of a traffic service, thereby making it possible to improve a service level of a traffic service at the transfer point.

Based on the new traffic service plan information received from the traffic service planning terminal 106 and the OD information 4, the traffic service cooperation support device 100 according to the present embodiment calculates a new evaluation value (a service level) related to a transportation service for a passenger at a transfer point based on the new traffic service plan information. When the calculated new service level does not satisfy a predetermined condition, the traffic service cooperation support device 100 transmits a new target value related to the transportation service at the transfer point to the traffic service planning terminal 106 of the traffic service provider based on the OD information 4.

As described above, when a service level corresponding to the new traffic service plan information received from the traffic service planning terminal 106 is not a satisfaction value, a new target value is calculated, and the calculated new target value is transmitted to the traffic service planning terminal 106. Accordingly, it is possible to facilitate a traffic service provider to provide traffic service plan information for reaching the service level target value again.

The traffic service cooperation support device 100 according to the present embodiment newly calculates an evaluation value (a service level) related to a transportation service for a passenger at a transfer point based on the new traffic service plan information received from the traffic service planning terminal 106 and the OD information 4. When the calculated new service level does not reach the service level target value, the traffic service cooperation support device 100 transmits an additional service level necessary for reaching the target value to the traffic service planning terminal 106. When the traffic service cooperation support device 100 receives information indicating that traffic service plan information is further added to the new traffic service plan information from the traffic service planning terminal 106, the traffic service cooperation support device 100 transmits economic consideration information corresponding to the added information to the traffic service planning terminal 106.

As described above, when the new traffic service plan information received as a reply from the traffic service planning terminal 106 still does not reach the target value, a service level necessary for reaching the target value is transmitted to the traffic service planning terminal 106. On the other hand, when the traffic service planning terminal 106 provides new traffic service plan information corresponding to the added information, economic incentive information is provided to the traffic service planning terminal 106 (a provider). Accordingly, it is possible to actively facilitate the provision of a transportation service to be added to a place where the service level does not reach the target value, and service levels of all traffic services can be maintained.

The traffic service cooperation support device 100 according to the present embodiment newly calculates an evaluation value (a service level) related to a transportation service for passengers at a transfer point based on the OD information 4 and the new traffic service plan information received from the traffic service planning terminal 106 (the traffic service planning terminal 106 of a mass transit service) that transmitted a constraint. When the calculated new service level does not reach the service level target value, economic penalty information corresponding to an amount at which the calculated new service level does not reach the service level target value is set to the traffic service planning terminal 106.

As described above, the traffic service cooperation support device 100 can prevent violation of a constraint and maintain service levels of all traffic services by imposing a penalty on each traffic service planning terminal 106 (a provider) when new traffic service plan information in which an important traffic service to which the constraint is imposed does not satisfy the constraint is transmitted.

The traffic service cooperation support device 100 according to the present embodiment transmits the calculated service level of a traffic service to the passenger terminal 110. Accordingly, a passenger who is about to use a traffic service can determine which traffic service is to be used.

The traffic service cooperation support device 100 according to the present embodiment predicts a future operation status of each transportation mode of each traffic service based on the traffic service plan information and the operation status information received from the traffic service planning terminal 106, and creates the traffic network information 7 based on the predicted operation status.

Accordingly, it is possible to estimate, based on the further operation status, a transfer point where the service level target value needs to be transmitted to the traffic service planning terminal 106 before an event such as an operation disturbance or an operation plan change actually occurs.

In the traffic service cooperation support system 10 according to the present embodiment, the traffic service planning terminal 106 generates new traffic service plan information based on the service level target value received from the traffic service cooperation support device 100, and controls a transportation mode based on the generated traffic service plan information.

Accordingly, it is possible to achieve cooperation between the traffic service cooperation support device 100 and an operation of a transportation mode of each traffic service, and it is possible to improve service levels of all traffic services through cooperation between a plurality of traffic service providers.

The invention is not limited to the embodiments described above and can be implemented using any component without departing from the gist of the invention. The embodiments and modifications described above are merely examples, and the invention is not limited to contents thereof as long as features of the invention are not impaired. Although various embodiments and modifications have been described above, the invention is not limited to contents thereof. Other aspects conceivable within the scope of a technical idea of the invention are also included within the scope of the invention.

For example, some functions of each device in the present embodiment may be provided in another device, or functions of another device may be provided in the same device.

For example, the configuration of each functional unit described in the present embodiment is an example, and for example, a part of the functional units may be incorporated in another functional unit, or a plurality of functional units may be implemented as one functional unit.

### Reference Signs List

- 10:: traffic service cooperation support system
- 100:: traffic service cooperation support device
- 201:: traffic network information creation unit
- 202:: service level calculation unit
- 203:: service level target value calculation unit
- 204:: service level constraint calculation unit
- 205:: economic benefit calculation unit

## Claims

1. A traffic service cooperation support device that transmits information to and receives information from a plurality of traffic service planning terminals, the traffic service cooperation support device comprising:
a calculation unit;
a storage unit; and
a communication unit, wherein
the communication unit receives, from the plurality of traffic service planning terminals, traffic service plan information, which is information including information on a transportation plan of a passenger by a transportation mode provided by traffic services,
the storage unit stores the traffic service plan information and travel information of a passenger acquired from a predetermined information processing device,
the calculation unit executes
service level calculation processing of calculating, based on the traffic service plan information stored in the storage unit and the travel information of a passenger by each of the traffic services stored in the storage unit, an evaluation value related to a transportation service for a passenger at a transfer point which is a boarding and alighting point common to a plurality of the traffic services among boarding and alighting points of the traffic services, and
service level target value calculation processing of determining whether the calculated evaluation value satisfies a predetermined condition, and calculating a target value related to a transportation service of a transportation mode of the traffic service at the transfer point based on the travel information when the calculated evaluation value does not satisfy the predetermined condition, and
the communication unit transmits the target value calculated in the service level target value calculation processing to the traffic service planning terminal related to a traffic service through which a passenger gets on and off at the transfer point.

2. The traffic service cooperation support device according to claim 1, wherein
the calculation unit
executes traffic network creation processing of creating, based on the received traffic service plan information, traffic network information including a departure time and the passenger capacity of the transportation mode at each of the boarding and alighting points,
further calculates a transfer time for a passenger at the transfer point as the evaluation value based on the traffic network information in the service level calculation processing, and
calculates a target value of the number of passengers to be transported by the traffic service from the transfer point based on the number of passengers who are about to transfer at the transfer point, which is calculated based on the travel information, when the calculated transfer time is equal to or longer than a predetermined time in the service level target value calculation processing.

3. The traffic service cooperation support device according to claim 1, wherein
in the service level target value calculation processing, the calculation unit executes constraint calculation processing of calculating a request of a transportation service for a predetermined traffic service among the plurality of traffic services together with the target value, and
the communication unit
transmits the calculated request of the transportation service to the predetermined information processing device related to the predetermined traffic service, and
receives new traffic service plan information from the predetermined information processing device, calculates information on an economic benefit obtained by providing an additional transportation service when the received new traffic service plan information does not include information corresponding to the request of the transportation service, and transmits the calculated information on the economic benefit to any information processing device related to the traffic service.

4. The traffic service cooperation support device according to claim 3, wherein
the calculation unit calculates, as the request of the transportation service, a minimum number of transfer passengers to be transferred to a transportation mode of a traffic service having a predetermined scale at the transfer point in the constraint calculation processing, and
when the new traffic service plan information received from the predetermined information processing device related to the traffic service having the predetermined scale is not information indicating a plan that allows passengers in the number equal to or larger than the minimum number of transfer passengers to be transferred, the communication unit calculates information on an economic benefit obtained by providing an additional transportation service and transmits the calculated information on the economic benefit to any information processing device related to the traffic service.

5. The traffic service cooperation support device according to claim 1, wherein
the communication unit receives new traffic service plan information from the predetermined information processing device which is a transmission destination of the target value,
the calculation unit executes economic benefit calculation processing of calculating a new evaluation value related to a transportation service for a passenger at the transfer point based on the received new traffic service plan information and the travel information, determining whether the calculated new evaluation value reaches a target value of the transportation service, and when the new evaluation value does not reach the target value, calculating, based on the new traffic service plan information and past operation information of a traffic service related to the new traffic service plan information, a transportation service estimated to provide an additional traffic service, a transportation capacity of the traffic service expected to be provided, and an economic benefit obtained by providing the additional transportation service, and
the communication unit transmits information on an economic benefit corresponding to the calculated transportation service to the information processing device related to the transportation service estimated to provide the additional traffic service.

6. The traffic service cooperation support device according to claim 5, wherein
in the economic benefit calculation processing,
the calculation unit calculates the number of transfer passengers at the transfer point as the new evaluation value based on the received new traffic service plan information and the travel information, determines whether the calculated new evaluation value reaches a target value of the number of transfer passengers calculated based on the travel information, and calculates, based on the new traffic service plan information and past operation information of a traffic service related to the new traffic service plan information, the number of transfer passengers to be transported from the transfer point in the transportation service estimated to provide the additional traffic service when the new evaluation value does not reach the target value of the number of transfer passengers, and
the communication unit transmits information on an economic benefit corresponding to the calculated number of transfer passengers to the information processing device related to the transportation service estimated to provide the additional traffic service.

7. The traffic service cooperation support device according to claim 1, wherein
the communication unit receives new traffic service plan information from the predetermined information processing device which is a transmission destination of the target value,
the calculation unit
newly calculates an evaluation value related to a transportation service for a passenger at the transfer point based on the new traffic service plan information and the travel information in the service level calculation processing, and
determines whether the newly calculated evaluation value satisfies a predetermined condition, and calculates a new target value related to a transportation service of a transportation mode of the traffic service based on the new traffic service plan information and the travel information when the newly calculated evaluation value does not satisfy the predetermined condition in the service level target value calculation processing, and
the communication unit transmits the calculated new target value to the predetermined information processing device related to a traffic service through which a passenger gets on and off at the transfer point.

8. The traffic service cooperation support device according to claim 1, wherein
the communication unit receives new traffic service plan information from the predetermined information processing device which is a transmission destination of the target value in the service level calculation processing,
the calculation unit executes additional target value calculation processing of newly calculating an evaluation value related to a transportation service for a passenger at the transfer point based on the new traffic service plan information and the travel information, and determining whether the calculated new evaluation value reaches the calculated target value related to the transportation service,
the communication unit
transmits the additional evaluation value necessary for reaching the target value to the predetermined information processing device when the new evaluation value does not reach the target value, and
receives traffic service plan information in which information is further added to the new traffic service plan information from the predetermined information processing device, and
when the traffic service plan information is received, the calculation unit executes economic rule application processing of setting economic consideration information corresponding to a transportation service indicated by the added information in association with the predetermined information processing device.

9. The traffic service cooperation support device according to claim 1, wherein
the calculation unit calculates a request of a transportation service for a predetermined traffic service among a plurality of the traffic services together with the target value in the service level target value calculation processing,
the communication unit
transmits the calculated request of the transportation service to the predetermined information processing device related to the predetermined traffic service, and
receives new traffic service plan information from the predetermined information processing device which is a transmission destination of the target value, and
the calculation unit
newly calculates an evaluation value related to a transportation service for a passenger at the transfer point based on the received new traffic service plan information and the travel information, and
further executes economic rule application processing of determining whether the calculated new evaluation value reaches the calculated target value related to the transportation service, and when the new evaluation value does not reach the target value, setting information of an economic penalty corresponding to an amount at which the new evaluation value does not reach the target value in association with the predetermined information processing device.

10. The traffic service cooperation support device according to claim 1, wherein
the communication unit transmits the calculated evaluation value related to the transportation service for a passenger at the transfer point to an information processing device managed by a passenger.

11. The traffic service cooperation support device according to claim 2, wherein
the communication unit receives the traffic service plan information and current operation status information of a transportation mode of each of the traffic services from a predetermined information processing device related to each of the traffic services, and
the calculation unit
further executes operation prediction processing of predicting a future operation status of each transportation mode of each of the traffic services based on the received traffic service plan information and operation status information in the traffic network creation processing, and
creates the traffic network information based on the predicted operation status.

12. A traffic service cooperation support method for a traffic service cooperation support device that transmits information to and receives information from a plurality of traffic service planning terminals, the traffic service cooperation support method comprising:
by the traffic service cooperation support device,
receiving traffic service plan information, which is information including information on a transportation plan of a passenger by a transportation mode provided by traffic services from the plurality of traffic service planning terminals;
storing the traffic service plan information and travel information of a passenger acquired from a predetermined information processing device;
executing service level calculation processing of calculating, based on the stored traffic service plan information and the stored travel information of a passenger by each of the traffic services, an evaluation value related to a transportation service for a passenger at a transfer point which is a boarding and alighting point common to a plurality of the traffic services among boarding and alighting points of the traffic services;
executing service level target value calculation processing of determining whether the calculated evaluation value satisfies a predetermined condition, and calculating a target value related to a transportation service of a transportation mode of the traffic service at the transfer point based on the travel information when the calculated evaluation value does not satisfy the predetermined condition; and
executing transmission processing of transmitting the target value calculated in the service level target value calculation processing to the predetermined information processing device related to a traffic service through which a passenger gets on and off at the transfer point.

13. A traffic service cooperation support system in which a traffic service cooperation support device including a calculation unit, a storage unit, and a communication unit transmits information to and receives information from a plurality of traffic service planning terminals each including a calculation unit, a communication unit, and a control unit, wherein
the communication unit of the traffic service cooperation support device receives, from the plurality of traffic service planning terminals, traffic service plan information, which is information including information on a transportation plan of a passenger by a transportation mode provided by traffic services,
the storage unit of the traffic service cooperation support device stores the traffic service plan information and travel information of a passenger acquired from a predetermined information processing device,
the calculation unit of the traffic service cooperation support device executes
service level calculation processing of calculating, based on the traffic service plan information stored in the storage unit and the travel information of a passenger by each of the traffic services stored in the storage unit, an evaluation value related to a transportation service for a passenger at a transfer point which is a boarding and alighting point common to a plurality of the traffic services among boarding and alighting points of the traffic services, and
service level target value calculation processing of determining whether the calculated evaluation value satisfies a predetermined condition, and calculating a target value related to a transportation service of a transportation mode of the traffic service at the transfer point based on the travel information when the calculated evaluation value does not satisfy the predetermined condition,
the communication unit of the traffic service cooperation support device transmits the target value calculated in the service level target value calculation processing to the predetermined information processing device related to a traffic service through which a passenger gets on and off at the transfer point,
the communication unit of the traffic service planning device receives the target value from the traffic service cooperation support device,
the calculation unit of the traffic service planning device generates new traffic service plan information based on the target value received from the traffic service cooperation support device, and
the control unit of the traffic service planning device controls the transportation mode based on the generated traffic service plan information.
